# FASCICULE DE BREVET EUROPEEN

(11) **EP 3 277 559 B1**
(45) Date de publication et mention de la délivrance du brevet: **14.08.2019**
(21) Numéro de dépôt: 16707908.6
(22) Date de dépôt: 12.02.2016
(51) Int. Cl.: B62D 21/15, B62D 25/08

(54) **STRUCTURE DE VÉHICULE COMPORTANT DEUX VOIES D'EFFORTS À COMPORTEMENT AMÉLIORÉ ET VEHICULE COMPORTANT UNE TELLE STRUCTURE**
FAHRZEUGSTRUKTUR MIT ZWEI KRAFTKANÄLEN MIT VERBESSERTEM VERHALTEN UND FAHRZEUG MIT SOLCH EINER STRUKTUR
VEHICLE STRUCTURE COMPRISING TWO FORCE CHANNELS HAVING IMPROVED BEHAVIOUR AND VEHICLE COMPRISING SUCH A STRUCTURE

(30) Priorité: 02.03.2015 FR 1551731
(43) Date de publication de la demande: 07.02.2018
(73) Titulaire: PSA AUTOMOBILES S.A., 78300 Poissy (FR)
(72) Inventeur: PERU, Marc, 92290 Chatenay Malabry (FR)
(86) Numéro de dépôt international: PCT/FR2016/050321
(87) Numéro de publication internationale: WO 2016/139399

(56) Documents cités:
- EP-A1- 1 256 510
- EP-A1- 2 810 854
- DE-A1- 19 953 808
- FR-A1- 2 813 269
- FR-A1- 2 896 222
- US-A1- 2008 122 255

## Description

La présente invention concerne une structure de véhicule comportant un premier élément de renfort et un second élément de renfort. Le premier élément de renfort est adapté pour transmettre une grande partie des efforts dus à un choc suivant une direction principale de travail, formant une voie principale d'effort. Le second élément de renfort est adapté pour transmettre le restant des efforts dus à ce choc selon ladite direction principal de travail, formant une voie d'effort secondaire. Le second élément de renfort constitue ainsi des moyens de reprise d'effort du premier élément de renfort.

Un exemple de réalisation d'une telle structure de véhicule connue est divulgué dans le document FR2896222 et est représenté sur la figure 1 et sur la figure 2

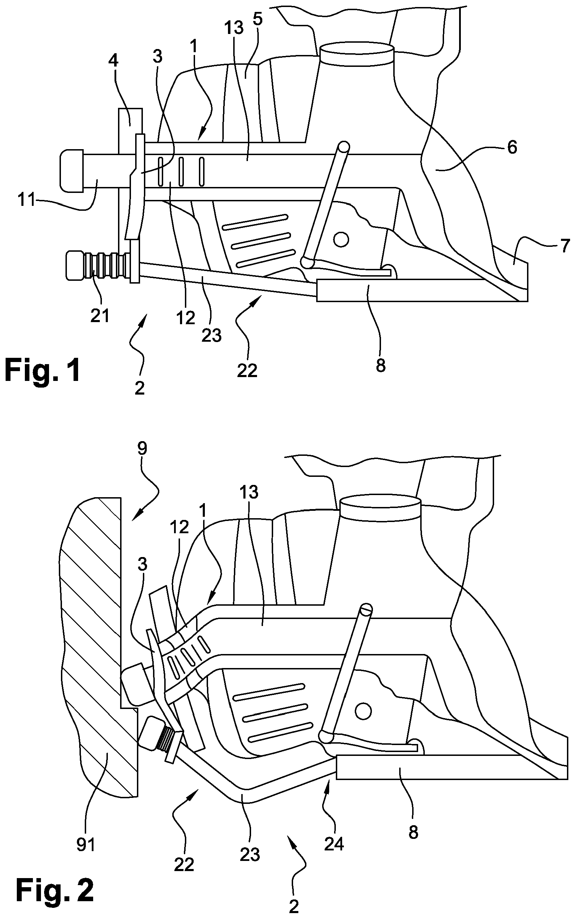

La figure 1 représente une vue partielle de la partie avant de la structure d'un véhicule tel que connu de l'état de la technique. La structure avant comporte un premier élément de renfort 1 et un second élément de renforts 2. La structure avant comporte une traverse avant 3 positionnée juste en arrière de la peau de pare-chocs avant (la peau de pare-chocs n'est pas représentée) et qui forme un support pour un radiateur 4. La traverse avant 3 forme aussi un élément de liaison rigide entre le premier élément de renfort 1 et le second élément de renfort 2. Le premier élément de renfort 1 forme une voie principale d'effort pour amortir et transmettre à une autre partie de la structure du véhicule une première partie de l'énergie résultante d'un choc sur l'avant du véhicule. Le premier élément de renfort 1 s'étend principalement suivant une direction principale de travail correspondant à la direction de déplacement du véhicule lors du choc avant. Le second élément de renfort 2 forme une voie d'effort secondaire pour amortir et transmettre une seconde partie de l'énergie résultante du choc selon la même direction principal de travail. Le second élément de renfort 2 s'étend principalement suivant la direction principale de travail, parallèlement au premier élément de renfort 1. Le premier élément de renfort 1 comporte une première partie 11, positionnée le plus en avant du véhicule, qui est adaptée pour amortir l'énergie résultante du choc en se compressant au maximum une fois un premier niveau d'effort appliqué sur l'avant du véhicule. La première partie 11 du premier élément de renfort 1 est généralement appelé « crash box ». Le premier élément de renfort 1 comporte, dans le prolongement de la première partie 11, une deuxième partie 12 qui est adaptée pour se déformer une fois un second niveau d'effort appliqué sur l'avant du véhicule. Le premier élément de renfort 1 comporte dans le prolongement de la deuxième partie 12, une troisième partie 13 qui est adaptée pour, une fois les deux seuils d'efforts dépassés, transmettre l'excédent d'énergie à amortir au reste de la structure du véhicule. La troisième partie 13 du premier élément de renfort 1 forme aussi une partie du berceau du moteur 5 et est en particulier couramment appelé longeronnet. Le moteur 5 est essentiellement positionné entre les deux longeronnets 13. La partie arrière des longeronnets 13 est solidarisée sur un tablier 6, qui forme une séparation entre l'habitacle du véhicule et le compartiment du moteur 5. Au-delà du tablier 6, les longeronnets 13 sont prolongés par les longerons 7 qui servent à rigidifier la structure centrale du véhicule. La première partie 11 et la deuxième partie 12 du premier élément de renfort 1 sont dimensionnées pour que sur un choc basse vitesse, seule la première partie 11 soit déformée. La première partie 11 du premier élément de renfort 1 est simple à remplacer, permettant de limiter les pièces à remplacer lors d'un tel choc à basse vitesse. Le second élément de renfort 2 comporte une première partie 21, positionnée en dessous du premier élément de renfort 1, qui est adaptée pour s'écraser sensiblement au même moment que la première partie 11 du premier élément de renfort 1. Le second élément de renfort 2 comporte, dans le prolongement de la première partie 21, une seconde partie 22 linéaire destinée à absorber une partie de l'énergie résultante du choc par une flexion de sa partie centrale 23. Une telle flexion de la partie centrale 23 correspond à un flambage de la seconde partie 22 du second élément de renfort 2. L'extrémité arrière de la seconde partie 22 du second élément de renfort 2 est solidarisée sur une partie du train avant du véhicule qui forme le berceau inférieur de suspension 8. Dans le cas d'un choc basse vitesse, les deux parties du second élément de renfort 2 peuvent être déformées, mais une telle déformation est là pour protéger le berceau inférieur 8 qui ne sera pas abimé lors d'un tel choc basse vitesse. Comme le second élément de renfort 2 n'a pas de rôle structurel pour l'avant du véhicule, il peut être facilement remplacé.

La figure 2 représente la partie avant de la structure du véhicule après un choc tel que réalisé par l'organisme « European New car Assessment Program » plus connu sous l'abréviation « Euro NCAP », qui consiste à impacter un véhicule lancé à 64 km/h contre une paroi 9 qui présente la particularité d'avoir une excroissance 91 en partie basse. Pour un véhicule du type « SUV », acronyme de « Sport Utility Vehicle », comprenant généralement une structure rehaussée par rapport à un véhicule automobile de type berline, la partie en excroissance 91 de la paroi 9 est uniquement en regard du second élément de renfort 2. Du fait de ce décalage, le second élément de renfort 2 subit des contraintes supérieures au premier élément de renfort 1, faisant que la partie centrale 23 de la seconde partie 22 du second élément de renfort 2, risque de se plier lors d'un tel choc au-delà de sa limite de résistance. La partie centrale 23 du second élément de renfort présente alors une déformation plastique, faisant que le second élément de renfort 2 ne présente plus de résistance au flambage lors du choc. L'amplitude de la déformation de la seconde partie 22 du second élément 2 risque alors de créer une rupture d'une articulation 24 qui relie le second élément de renfort 2 au berceau inférieur 8. Le second élément de renfort 2 entraîne aussi vers le bas la traverse avant 3 et par suite, l'extrémité avant de la seconde partie 12 du premier élément de renfort 1. Le décalage vers le bas de l'extrémité avant de la seconde partie 12 du premier élément de renfort 1 crée un fort décalage angulaire entre la seconde partie 12 et la troisième partie 13 du premier élément de renfort 1. Un tel décalage angulaire réduit considérablement la résistance lors du choc du premier élément de renfort 1.

Un des buts de l'invention est donc de remédier au moins partiellement aux inconvénients de l'art antérieur et de proposer une structure de véhicule qui comporte un premier élément de renfort et un tel second élément de renfort et qui est adaptée pour, lors d'un choc contre une paroi présentant une telle dissymétrie, conserver un bon alignement structurel aux premier et second éléments de renfort. Une telle conservation de cet alignement structurel permettant de mieux amortir l'énergie due au choc.

Elle propose notamment à cet effet, une structure de véhicule comportant un premier élément de renfort et un second élément de renfort, le premier élément de renfort étant adapté pour transmettre une grande partie des efforts dus à un choc suivant une direction principale de travail, formant une voie principale d'effort, le second élément de renfort étant adapté pour transmettre le restant des efforts dus au choc selon ladite direction principal de travail, formant une voie d'effort secondaire, telle que des moyens de liaison élastiques relient le premier élément de renfort au second élément de renfort.

Selon une première caractéristique de l'invention, le second élément de renfort comporte une partie linéaire destinée à absorber une partie de l'énergie due au choc par une flexion de sa partie centrale, les moyens de liaison élastique comportent une première extrémité solidaire de ladite partie centrale.

Selon une deuxième caractéristique de l'invention, le premier élément de renfort comporte dans un même prolongement suivant ladite direction principale de travail, au moins une première partie destinée à s'écraser lors dudit choc et une autre partie qui forme un longeronnet, une seconde extrémité des moyens de liaison élastique étant solidaire dudit longeronnet.

Selon un premier mode de réalisation de l'invention, au moins une partie des moyens de liaison élastiques est formée par un câble. Le câble pour résister au choc sans rompre, présente généralement une rupture à la charge d'au moins 3400kg.

Selon deux autres modes de réalisation de l'invention, la structure comporte un pare-boue destinée à au moins partiellement recouvrir une roue du véhicule, une partie du pare-boue étant solidaire du premier élément de structure et du second élément de structure de manière à former lesdits moyens de liaison élastique.

Selon une première caractéristique de ces deux autres modes de réalisation, le pare-boue est réalisé dans une matière plastique, au moins une partie des moyens de liaison élastique étant formées directement dans le pare-boue. Les moyens de liaison élastique forment une bretelle modifiant localement la rigidité du pare-boue, une première extrémité de la bretelle étant solidaire du premier élément de structure, la seconde extrémité étant solidaire du second élément de structure.

Selon un premier de ces deux autres modes de réalisation, la bretelle comporte une première partie linéaire creuse formée dans le pare-boue et une seconde partie linéaire rapportée destinée à être positionné dans ladite première partie de la bretelle.

Selon un second de ces deux autres modes de réalisation, la bretelle est formée par une surépaisseur du pare-boue. Une âme en plastique ou en métal peut être insérée dans ladite surépaisseur lors de la fabrication par moulage du pare-boue.

La présente invention concerne aussi un véhicule comportant une structure qui comporte au moins une des caractéristiques précédentes.

D'autres caractéristiques et avantages de l'invention apparaîtront plus clairement à la lecture de la description suivante, donnée à titre d'exemple illustratif et non limitatif, et des dessins annexés parmi lesquels :
- La figure 1, déjà décrite, représente une vue partielle de la partie avant de la structure d'un véhicule tel que connu de l'état de la technique ;
- La figure 2, déjà décrite, représente une vue partielle de la partie avant de la structure du véhicule tel que connu de l'état de la technique, après un choc avant contre une paroi dissymétrique, présentant une excroissance en partie inférieur ;
- Les figures 3 à 5 représentent des vues partielles de la partie avant de la structure du véhicule selon un premier mode de réalisation de l'invention, lors des différentes phases d'un choc avant contre ladite paroi dissymétrique ;
- La figure 6 représente un pare-boue qui comporte une bretelle qui forme des moyens de liaison élastique selon un deuxième mode de réalisation de l'invention ; et
- La figure 7 représente un pare-boue qui comporte une bretelle qui forme des moyens de liaison élastique selon un troisième mode de réalisation de l'invention.

Les figures 1 et 2 ont déjà été décrites en partie introductive. Les parties communes entre la structure du véhicule selon l'état de la technique et selon l'invention conservent les mêmes références.

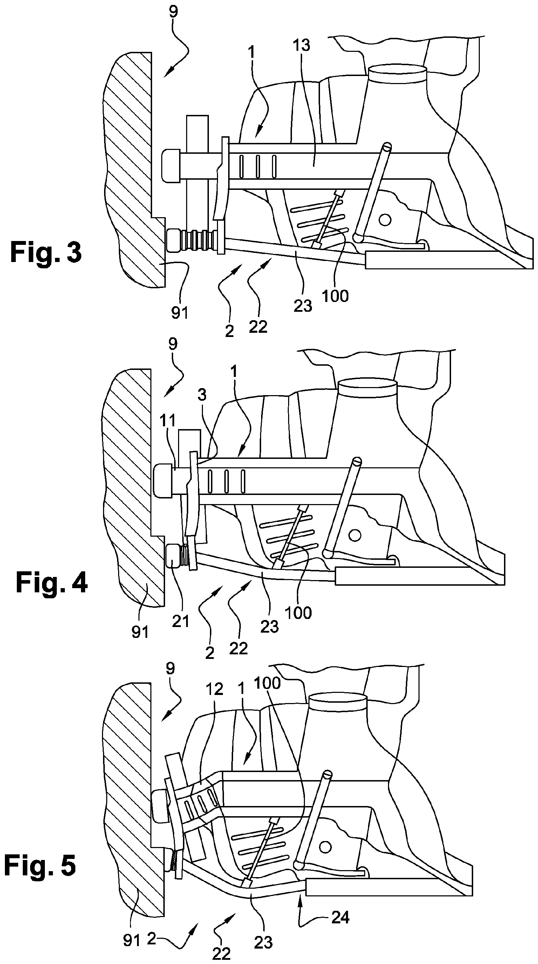

Les figures 3 à 5 représentent des vues partielles de la partie avant de la structure du véhicule selon l'invention, lors des différentes phases d'un choc avant contre une paroi 9 de type dissymétrique, qui présente une excroissance 91 en partie basse. Une telle paroi 9 dissymétrique correspond à un des essais de choc avant pratiqué par l'organisme « Euro NCAP », tel qu'explicité précédemment.

Tel que représenté en figure 3, la partie en excroissance 91 de la paroi 9 est positionnée de telle sort que le second élément de renfort 2 est en premier en contact de la paroi 9. Selon l'invention, des moyens de liaison élastique 100 relient la troisième partie 13 du premier élément de renfort 1 à la seconde partie 22 du second élément de renfort 2, de préférence à proximité de la partie centrale 23 de la seconde partie 22 du second élément de renfort 2.

Sur la figure 4 est représentée une première phase du choc avant où la première partie 11 du premier élément de renfort 1 est compressée suite au contact contre la partie en excroissance 91 de la paroi 9. Le second élément de renfort 2, qui est sollicité en premier du fait de la présence de la partie en excroissance 91, présente à la fois un écrasement de la première partie 21 et une déformation de la seconde partie 22. La seconde partie 22 du second élément de renfort 2 commence à fléchir, se courbant au niveau de sa partie centrale 23. La courbure est pour le moment de faible amplitude faisant que les moyens de liaison élastique 100 ne sont pas encore sollicités. Cette dissymétrie dans le choc avant à comme effet de faire légèrement basculer vers l'avant la traverse avant 3.

Sur la figure 5 est représentée une seconde phase du choc avant où le premier élément de renfort 1 est sollicité à son tour. Le second élément de renfort 2, qui est toujours davantage sollicité du fait de la présence de la partie en excroissance 91, présente un fort fléchissement dans la partie centrale 23 de la seconde partie 22. Les moyens de liaison élastiques 100 limitent le fléchissement de la seconde partie 22 du second élément de renfort 2, évitant ainsi d'atteindre la limite de déformation élastique de la seconde partie 22 du second élément de renfort 2 et solliciter jusqu'à la rupture l'articulation 24. Les moyens de liaison élastiques 100 permettent aussi de limiter le basculement vers l'avant de la traverse avant 3, permettant de maintenir sensiblement aligné la deuxième partie 12 et la troisième partie 13 du premier élément de renfort 1, lui conservant toutes ces capacités de résistance au choc.

Selon un premier mode de réalisation, les moyens de liaison élastiques peuvent être formés par un câble métallique. Un des exemples de câble étant constitué par un câble à 19 fils, qui présente un diamètre total de 6mm pour un poids au mètre de 180g avec une rupture à la charge minimum de 3400 kg. Un tel câble se retrouve couramment pour la transmission d'efforts en milieu automobile comme dans la réalisation des câbles de transmission des freins de parking.

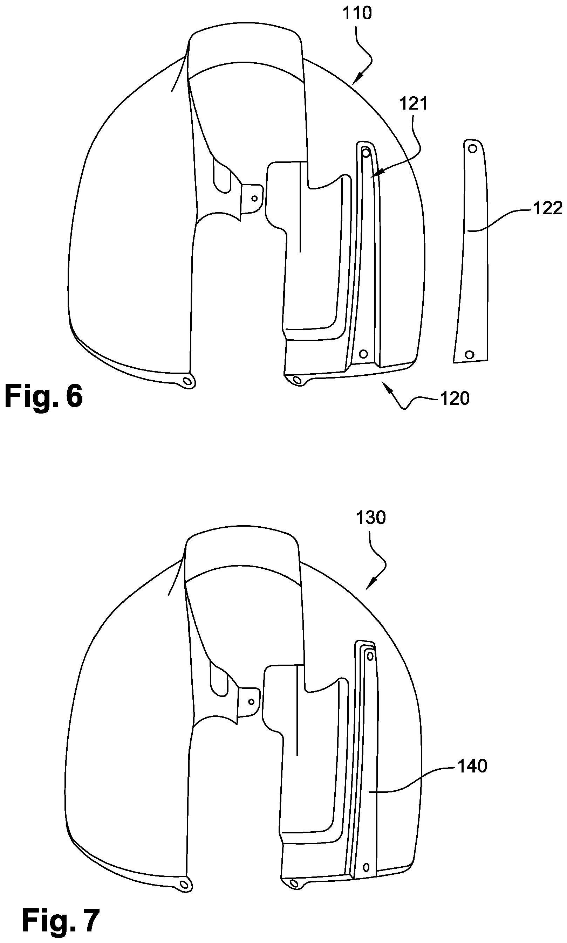

La figure 6 représente un pare-boue 110 qui comporte une bretelle 120 qui forme des moyens de liaison élastique selon un deuxième mode de réalisation de l'invention. La bretelle 120 comporte une première partie 121 et une seconde partie 122. La première partie 121 de la bretelle 120 présente une forme allongée creuse, directement formée dans le pare-boue 110. La première partie 121 présente une forme adaptée pour recevoir la seconde partie 122 qui présente aussi une forme allongée correspondante. Aux deux extrémités de la bretelle 120 sont solidarisés la troisième partie 13 du premier élément de renfort 3 et la seconde partie 22 du second élément de renfort 2, tels que représentés sur les figues précédentes. Du fait de l'élasticité du pare-boue 100 qui est constitué d'une matière plastique, la bretelle 120 forme ainsi des moyens de liaison élastiques qui permettent de limiter, comme précédemment, le fléchissement dans sa partie centrale 23 de la seconde partie 22 du second élément de renfort 2. La seconde partie 122 de la bretelle 120 forme une pièce de renfort qui permet d'ajuster la raideur de la bretelle 120. La seconde partie 122 de la bretelle 120 peut être maintenue dans la première partie 121 de la bretelle 120 par collage. Dans le cas où le pare-boue 110 est réalisé dans la même matière plastique que la seconde partie 122 de la bretelle 120, un assemblage à chaud peut aussi être utilisé. Une telle bretelle 120 doit permettre à la partie centrale 23 de la seconde partie 22 du second élément de renfort 2 de pouvoir légèrement se fléchir lors d'un choc sans atteindre une valeur seuil qui fragiliserait dangereusement le second élément de renfort 2 et par suite le premier élément de renfort 1.

La figure 7 représente un pare-boue 130 qui comporte une bretelle 140 qui forme des moyens de liaison élastique selon un troisième mode de réalisation de l'invention. La bretelle 140 présente une forme allongée en surépaisseur du pare-boue 130. Un insert, réalisé dans une matière présentant des caractéristiques de rigidité différente, peut être inséré dans la bretelle 140 lors de la réalisation du pare-boue 130. Aux deux extrémités de la bretelle 140 sont solidarisés la troisième partie 13 du premier élément de renfort 3 et la seconde partie 22 du second élément de renfort 2, tels que représentés sur les figues 1 à 5. Comme précédemment, le dimensionnement de cette surépaisseur permet d'ajuster le coefficient de raideur de la bretelle 130 qui permet de conditionner le comportement du second élément de renfort 2 et du premier élément de renfort lors du choc.

Bien entendu, d'autres exemples de modes de réalisation peuvent être envisagés sans pour autant sortir du cadre de l'invention. Notamment sur la manière de réaliser un pare-boue qui comporte une partie formant des moyens de liaison élastique. De même, les exemples de donnés numériques indiqués pour le câble du premier mode de réalisation peuvent être modifiés en fonction du poids du véhicule, du matériau utilisé pour la structure du véhicule ou de l'amplitude du fléchissement de la partie centrale de la seconde partie du second élément de renfort qu'il est souhaitable de conserver. La structure du véhicule telle que décrite correspond à une partie avant du véhicule, mais l'invention peut indifféremment être appliquée sur une partie arrière de la structure du véhicule.

## Revendications

1. Structure de véhicule comportant un premier élément de renfort (1) et un second élément de renfort (2), le premier élément de renfort (1) étant adapté pour transmettre une grande partie des efforts dus à un choc suivant une direction principale de travail, formant une voie principale d'effort, le second élément de renfort (2) étant adapté pour transmettre le restant des efforts dus audit choc selon ladite direction principal de travail, formant une voie d'effort secondaire, **caractérisée en ce que** des moyens de liaison élastiques (100, 120, 140) relient le premier élément de renfort (1) au second élément de renfort (2).

2. Structure selon la revendication 1, **caractérisée en ce que** le second élément de renfort (2) comporte une partie linéaire (22) destinée à absorber une partie de l'énergie due au choc par une flexion de sa partie centrale (23), les moyens de liaison élastique (100, 120, 140) comportent une première extrémité solidaire de ladite partie centrale (23).

3. Structure selon la revendication 1 ou 2, **caractérisée en ce que** le premier élément de renfort (1) comporte dans un même prolongement suivant ladite direction principale de travail, au moins une première partie (11) destinée à s'écraser lors dudit choc et une autre partie qui forme un longeronnet (13), une seconde extrémité des moyens de liaison élastique (100, 120, 140) étant solidaire dudit longeronnet (13).

4. Structure selon l'une quelconque des revendications précédentes, **caractérisée en ce qu'**au moins une partie des moyens de liaison élastiques (100) est formée par un câble.

5. Structure selon la revendication 4, **caractérisée en ce que** ledit câble (100) présente une rupture à la charge d'au moins 3400kg.

6. Structure selon l'une quelconque des revendications 1 à 3, **caractérisée en ce qu'**elle comporte un pare-boue (110, 130) destinée à au moins partiellement recouvrir une roue du véhicule, une partie (120, 140) du pare-boue (110, 130) étant solidaire du premier élément de renfort (1) et du second élément de renfort (2) de manière à former lesdits moyens de liaison élastique (120, 140).

7. Structure selon la revendication précédente, **caractérisée en ce que** le pare-boue (110, 130) est réalisé dans une matière plastique, au moins une partie des moyens de liaison élastique (120, 140) est formée directement dans le pare-boue (110, 130).

8. Structure selon la revendication précédente, **caractérisée en ce que** les moyens de liaison élastique forment une bretelle (120, 140) modifiant localement la rigidité du pare-boue (110, 130), une première extrémité de la bretelle (120) étant solidaire du premier élément de renfort (1), la seconde extrémité étant solidaire du second élément de renfort (2).

9. Structure selon la revendication précédente, **caractérisée en ce que** la bretelle (120) comporte une première partie (121) linéaire creuse formée dans le pare-boue (110) et une seconde partie linéaire rapportée (122) destinée à être positionné dans ladite première partie (121) de la bretelle (120).

10. Véhicule comportant une structure selon l'une quelconque des revendications précédentes.

## Patentansprüche

1. Fahrzeugstruktur, die ein erstes Verstärkungselement (1) und ein zweites Verstärkungselement (2) umfasst, wobei das erste Verstärkungselement (1) angepasst ist, um einen großen Teil der Kräfte zu übertragen, die auf einen Stoß entlang einer Hauptarbeitsrichtung zurückzuführen sind, die einen Hauptkraftkanal bildet, übertragen werden, wobei das zweite Verstärkungselement (2) angepasst ist, um den Rest der Kräfte, die auf den Stoß zurückzuführen sind, entlang der Hauptarbeitsrichtung, die einen Sekundärkraftkanal bildet, zu übertragen, **dadurch gekennzeichnet**, das elastische Verbindungsmittel (100, 120, 140) das erste Verstärkungselement (1) mit dem zweiten Verstärkungselement (2) verbindet.

2. Struktur nach Anspruch 1, **dadurch gekennzeichnet, dass** das zweite Verstärkungselement (2) einen linearen Teil (22) umfasst, der dazu bestimmt ist, einen Teil der Energie, die auf den Stoß zurückzuführen ist, durch eine Biegung seines zentralen Teils (23) zu absorbieren, wobei die elastischen Verbindungsmittel (100, 120, 140) ein erstes Ende, das fest mit dem zentralen Teil (23) verbunden ist, umfassen.

3. Struktur nach Anspruch 1 oder 2, **dadurch gekennzeichnet, dass** das erste Verstärkungselement (1) in einer selben Verlängerung entlang der Hauptarbeitsrichtung mindestens einen ersten Teil (11) umfasst, der dazu bestimmt ist, bei dem Stoß zusammengedrückt zu werden, und einen anderen Teil, der einen Holm (13) bildet, wobei ein zweites Ende der elastischen Verbindungsmittel (100, 120, 140) fest mit dem Holm (13) verbunden ist.

4. Struktur nach einem der vorstehenden Ansprüche, **dadurch gekennzeichnet, dass** mindestens ein Teil der elastischen Verbindungsmittel (100) von einem Kabel gebildet ist.

5. Struktur nach Anspruch 4, **dadurch gekennzeichnet, dass** das Kabel (100) eine Bruchbelastung von mindestens 3400 kg aufweist.

6. Struktur nach einem der Ansprüche 1 bis 3, **dadurch gekennzeichnet, dass** sie einen Kotflügel (110, 130) umfasst, der dazu bestimmt ist, ein Rad des Fahrzeugs mindestens teilweise abzudecken, wobei ein Teil (120, 140) des Kotflügels (110, 130) fest mit dem ersten Verstärkungselement (1) und dem zweiten Verstärkungselement (2) derart verbunden ist, dass er die elastischen Verbindungsmittel (120, 140) bildet.

7. Struktur nach dem vorstehenden Anspruch, **dadurch gekennzeichnet, dass** der Kotflügel (110, 130) aus einem Kunststoff hergestellt ist, dass mindestens ein Teil der elastischen Verbindungsmittel (120, 140) direkt in dem Kotflügel (110, 130) gebildet ist.

8. Struktur nach dem vorstehenden Anspruch, **dadurch gekennzeichnet, dass** die elastischen Verbindungsmittel einen Verbindungssteg (120, 140) bilden, der die Steifigkeit des Kotflügels (110, 130) lokal verändert, wobei ein erstes Ende des Verbindungsstegs (120) fest mit dem ersten Verstärkungselement (1) verbunden ist, wobei das zweite Ende fest mit dem zweiten Verstärkungselement (2) verbunden ist.

9. Struktur nach dem vorstehenden Anspruch, **dadurch gekennzeichnet, dass** der Verbindungssteg (120) einen ersten linearen Teil (121), der in dem Kotflügel (110) gebildet ist, und einen zweiten angebauten linearen Teil (122), der dazu bestimmt ist, in dem ersten Teil (121) des Verbindungsstegs (120) positioniert zu sein, umfasst.

10. Fahrzeug, das eine Struktur nach einem der vorstehenden Ansprüche umfasst.

## Claims

1. A vehicle structure comprising a first reinforcing element (1) and a second reinforcing element (2), the first reinforcing element (1) being capable of transmitting a large part of the forces due to a shock along a main working direction, forming a main force channel, the second reinforcing element (2) being capable of transmitting the remainder of the forces due to said shock along said main working direction, forming a secondary force channel, **characterized in that** resilient connection means (100, 120, 140) connect the first reinforcing element (1) to the second reinforcing element (2).

2. The structure according to Claim 1, **characterized in that** the second reinforcing element (2) comprises a linear part (22) intended to absorb a part of the energy due to the shock by a flexion of its central part (23), the resilient connection means (100, 120, 140) comprise first end integral with said central part (23).

3. The structure according to Claim 1 or 2, **characterized in that** the first reinforcing element (1) comprises, in a same extension following said main working direction, at least a first part (11) intended to become crushed during said shock, and another part which forms a small side rail (13), a second end of the resilient connection means (100, 120, 140) being integral with said small side rail (13).

4. The structure according to any one of the preceding claims, **characterized in that** at least a portion of the resilient connection means (100) is formed by a cable.

5. The structure according to Claim 4, **characterized in that** said cable (100) presents a rupture at a load of at least 3400 kg.

6. The structure according to any one of Claims 1 to 3, **characterized in that** it comprises a mudguard (110, 130) intended to at least partially cover a wheel of the vehicle, a part (120, 140) of the mudguard (110, 130) being integral with the first reinforcing element (1) and with the second reinforcing element (2) so as to form said resilient connection means (120, 140).

7. The structure according to the preceding claim, **characterized in that** the mudguard (110, 130) is made from a plastic material, at least a portion of the resilient connection means (120, 140) is formed directly in the mudguard (110, 130).

8. The structure according to the preceding claim, **characterized in that** the resilient connection means form a strap (120, 140) modifying locally the rigidity of the mudguard (110, 130), a first end of the strap (120) being integral with the first reinforcing element (1), the second end being integral with the second reinforcing element (2).

9. The structure according to the preceding claim, **characterized in that** the strap (120) comprises a first hollow linear part (121) formed in the mudguard (110), and a second linear attachment part (122) intended to be positioned in said first part (121) of the strap (120).

10. A vehicle comprising a structure according to any one of the preceding claims.
